Europäisches Patentamt

(19) European Patent Office

Office européen des brevets

(11) Publication number: **0 016 220**
**B1**

(12) **EUROPEAN PATENT SPECIFICATION**

(45) Date of publication of patent specification: **15.01.86**

(21) Application number: **79901144.0**

(22) Date of filing: **05.09.79**

(86) International application number:
**PCT/SE79/00179**

(87) International publication number:
**WO 80/00542 03.04.80 Gazette 80/07**

(51) Int. Cl.⁴: **B 01 D 37/00, C 02 F 1/00,
C 01 B 17/90, B 01 D 46/00,
C 10 G 31/09**

(54) **PROCESS OF FILTRATION.**

(30) Priority: **05.09.78 SE 7809355
05.03.79 SE 7909355
28.05.79 SE 7909355
01.08.79 SE 7909355**

(43) Date of publication of application:
**01.10.80 Bulletin 80/20**

(45) Publication of the grant of the patent:
**15.01.86 Bulletin 86/03**

(84) Designated Contracting States:
**CH DE FR GB LU NL SE**

(56) References cited:
**DE-B-1 209 734
DE-B-1 285 455
DE-B-2 713 033
GB-A-1 000 038
SE-C- 12 900
US-A-3 210 299
US-A-3 599 797**

(73) Proprietor: **Hultman, Ture
Box 3018
S-132 03 Saltsjö-Boo (SE)**
(73) Proprietor: **Nyberg, Fred
Flygarvägen 179
S-175 63 Järfälla (SE)**
(73) Proprietor: **Pedersen, Per
Box 3018
S-132 03 Saltsjö-Boo (SE)**

(72) Inventor: **NYBERG, Fred
Flygarvägen 179
S-175 63 Järfälla (SE)**

(74) Representative: **Wibom, Hans Sven Erik et al
Dr. Ludwig Brann Patentbyra AB Box 7524
Kungsgatan 3
S-103 92 Stockholm (SE)**

Courier Press, Leamington Spa, England.

## Description

This invention is related to a method and an apparatus for filtering liquids preferably aqueous liquids such as raw water intended for drinking or similar, water in aquariums, swimming pools and similar, sewage or especially final filtering of sewage water after purification, industrial water of various types such as cooling water and also other hydrophilic or hydrophobic liquids such as salt solutions, acids, such as sulfuric acids, oils, gasoline and other hydrocarbon containing products.

Thus the invention comprises a process for filtering liquids for removing liquid or solid impurities which comprises passing said liquid through a body of mineral wool fibre material cut from a fibre material web with a thickness of at least 2 cm prepared by forming a melt into fibres with a thickness of essentially from 1 to 20 micrometres, depositing said fibres as a web on a surface and forming and bonding the fibres with a binder at a substantial part of the points at which the fibres contact each other to a layer web, characterized by using a web in which said fibres at least along the main part of the total fibre length exhibit a direction which deviates less than 45° from a main direction plane formed by said surface, said mineral fibre material having a density of from 50 to 200 kg/m³ and a stiffness, expressed as compressibility under a load of 4.9 kPa on the upper surface of a cylinder of the material with the diameter 100 mm and the height 100 mm of at most 40%, in which filtering process the liquid is brought to penetrate into said body of mineral fibres material through an inflow surface area comprising the major part of said body of fibre material is removed from said body through an outflow surface area by at least one outlet opening nozzle urged against a surface of said body of fibre material cut in a direction transverse to the direction of said web, the ratio of the inflow surface area of said body of fibre material through which the liquid is introduced into the body and the outflow surface area through which the liquid is removed from said body of fibre material being at least 10, said inlet surface area of said body of fibre material being at least 90% of the total surface area of said body.

Swedish Patent Specification SE—C—12 900 describes a filter made from wood by horizontally sectioning the trunk of a tree and surrounding the section so made by a metal annulus.

US—A—3 599 797 describes a filter made of coated fibres that lie in substantially parallel planes which are generally parallel to the direction of flow of medium to be filtered so as to have a net fibre angle of approximately zero.

US—A—3 210 299 describes a two part filter having an outer circumferentially wound part and inner radially orientated fibres 12.

Said prior art does not anticipate the process for filtering liquids with a body of mineral wool material cut from a web of said material as defined in the claims.

The filter material used according to the invention thus consists essentially of mineral wool, preferably stone or rock wool, prepared by forming a melt into fibres with a thickness of essentially 1 to 20 micrometres, e.g. by blowing or spinning the melt to fibres. A suitable type is basalt fibres which in addition to basalt may also comprise e.g. lime e.g. 10—30% by weight lime (calcium oxide) and 90—70% basalt or similar materials or starting materials which give a similar final composition. Suitable main constituents are in % by weight 45—50% $SiO_2$, 10—15% $Al_2O_3$, 10—18% CaO, 6—12% MgO, 6—12% FeO, optionally 1—5% $K_2O$ + $Na_2O$ and up to 1—3% MnO and up to 1—3% $TiO_2$. An example is 47% $SiO_2$, 14% $Al_2O_3$, 1% $TiO_2$, 8% FeO, 16% CaO, 10% MgO, 1% MnO, 2% $Na_2O$, 1% $K_2O$. The fibre material is preferably bound with a resinous binder and non-hydrophobic or is made hydrophilic.

The filter material used according to the invention comprises the main part of the total fibre length oriented in the direction of a plane, preferably randomly oriented in said plane.

Preferably about 50—90% and especially 60—80% e.g. about 70% of the fibres are directed in the direction of said plane which means that the fibres form an angle of less than 45° in relation to said plane and especially an angle of less than 30°, especially an angle of less than 20°. The rest of the fibres are suitably randomly oriented in other directions.

The fibre thickness of the filter material is preferably mainly within the range of about 1—10 µm, especially a thickness of about 2—7 µm, with which is meant that the fibres along a main part of the fibre length have a thickness within said range.

The density of the filter material in the condition used for filtering is preferably up to 150 kg/m³, e.g. up to 120 or 100 kg/m³, and exceeds 50, e.g. exceeds 70 or 90 kg/m³.

The filter material should also exhibit a certain stiffness which may be expressed as compressibility in per cent under a stated load per surface area, calculated normal to the main direction plane of the fibres according to definition above: a total compressibility under a load of 4.9 kPa (= 0.5 m water head) on the upper surface of a cylinder with a height of 100 mm and a diameter of 100 mm of at most 40% preferably at most 30% and normally at most 10—20% in the dry or wet condition.

According to the invention filtering through the fibre material is performed in such a way that the filtered medium is withdrawn from the filter material in a direction which is essentially in the main direction of the plane of the fibres according to the definition above or so that the liquid flows essentially in said direction through the filter. The fibre material is prepared as a web with the main direction plane of the fibres coinciding with the main direction of the web. Said web is cut into suitable pieces, usually in a right angle to the direction of the web and the main direction plane of the fibre. A piece of such a filter material or filter web is arranged in a filter holder provided with an outlet means which permits the withdrawal of the filtered media through a surface of the filter arranged transverse to and preferably perpendicular to the direction plane of the fibres.

In the accompanying drawings,

Figure 1 shows a piece of filter material,

Figures 2a and 2b are a side view and a top view resp. of a filter holder,

Figure 3 is a schematic side view of a piece of filter material,

Figure 4a is a sectional view along line 4A—4A of Figure 4b and Figure 4b is a top view of a filter holder,

Figure 5 is a schematic cross section of a filter device,

Figure 6 is a schematic cross section of the device of Figure 5 along the line A—A of Figure 5,

Figure 7 is a schematic sectional partial view of a device similar to the device of Figure 5,

Figures 8 and 9 show the distribution of the fibre length and fibre diameter resp. of a typical filter material which can be used according to this invention, and

Figure 10 shows compression curves of typical filter materials which can be used according to this invention.

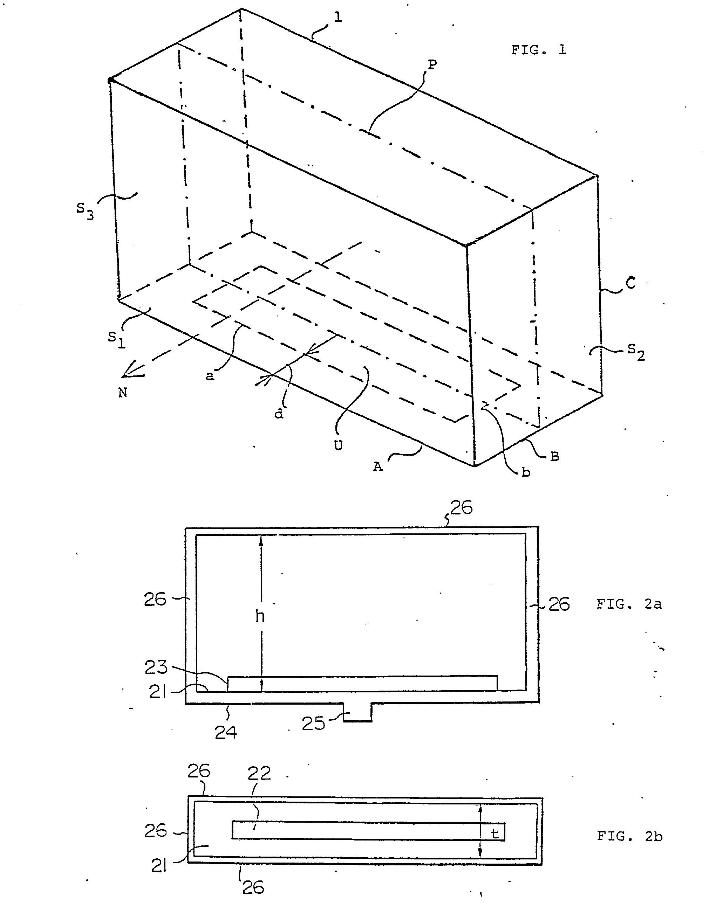

Figure 1 shows a piece of filter material 1 with a bottom surface $S_1$ with the edges A and B, and a vertical side surface $S_2$ with edges B and C and a second vertical side surface $S_3$ with the edges A and C. The side $S_3$ is supposed to be parallel with the main direction plane P of the fibres and consists e.g. of the side surface of a web material prepared e.g. by spinning or spraying of a melt into fibres against a support belt (lay-down belt). The direction perpendicular to said plane N is shown on the figure.

According to the invention the filtered medium is normally withdrawn through one or more of the side surfaces $S_1$ and $S_2$. On Figure 1 a hypothetical outlet U with edges a and b is shown with broken lines.

Usually the filter material is used in the form of pieces with rectangular or square side surfaces which are mutually perpendicular, but, of course, it is possible to use filter pieces of other shapes arranged so that the filtered medium flows out from the filter material through a surface cut transverse to the main direction plane.

It is preferable that the outflow opening U is restricted to a periphery at a certain distance d from the periphery of surface $S_1$, whereby the filtered medium which is supposed to have free access to the entire or main part of the remaining surfaces (e.g. $S_2$, $S_3$), is forced to flow through the filter material for a certain distance along a path to the outlet U. The distance d is suitably 1—5 cm, preferably about 2—4 cm. Thus a shortest flow path of 1—5 cm, preferably about 2—4 cm through the filter material is usually desired in order to obtain a sufficient filtering effect. Said distance comprises preferably a direction perpendicular to the plane P. If the flow is in the direction of plane P a larger minimum flow path extension is usually desired e.g. up to 10 cm and preferably at least 1—3 cm.

Figures 2a and 2b show examples of suitable filter holders. Figure 2a shows the filter holder from one side and Figure 2b from above. The filter holder comprises a bottom plate 21 of extended shape with a lengthwise extending opening 22 formed by a flange 23 extending upward from the bottom plate 21. Below the bottom plate 21 with the opening 22 is a box 24 with an outlet 25 in the shape of a short tube. A frame 26 protrudes from the bottom plate 21. When using the filter holder a filter slab such as the filter slab 1 on Figure 1 is arranged in the frame 26 so that an outlet surface of the filter slab such as surface $S_1$ on Figure 1 is in contact with the outlet flange 23. The filter slab is preferably urged into the frame so that the flange 23 penetrates into a surface which is perpendicular to the main direction plane of the fibres e.g. the side surface $S_1$ on Figure 1. Hereby the seal between the filter material and the filter holder is improved and the filtered medium is forced to pass through a sufficient thickness of the filter material before it flows out through the opening 22.

The extension of the filter material perpendicular to the main direction plane of the fibres, i.e. the direction N may vary within broad limits but is usually within the range 2—30 cm and preferably 5—15 cm, e.g. about 10 cm. The extension of the filter material in the direction of the fibre direction plan may also vary within broad limits, partly depending upon the thickness in the direction N. The extension h in a direction perpendicular to the flow-out opening or flow-out surface of the filter may e.g. be 1—10 times the thickness t (B on Figure 1) and preferably 2—4 times said thickness, e.g. 3 times that thickness. The extension in the direction H should be selected so that the filtering effect of the entire filter can be used, i.e. not larger than an extension which permits deposition of an essential quantity of filtered material in a part of the filter material remote from the outflow opening before parts of the filter material closer to the flowout opening are clogged to such an extent that the flow of the filtered medium through the filter material from the remote parts to the flowout opening reaches an unacceptably low level. Common values of h are up to 1 m, preferably up to 0.8 m, in some cases up to 0.6 or 0.4 m. h should usually be at least 0.05—0.1 m, preferably at least 0.2 m, in many cases 0.4—0.6 m, but at least large enough to give a sufficient filtering effect.

In order to improve the flow through the filter from the outer part of the filter, which is the most active for the filtration, to the outflow opening through the inner parts of the filter material, the inner parts of said material may consist of a more pervious material than the outer parts. Furthermore, channels which improve the flow of the filtrate to the outflow area of the filter material may be formed in the inner parts of the filter material. Said channels may e.g. be achieved with elongated means which are pressed into the filter material in the direction of the main direction plane of the fibres essentially in the direction towards the outflow opening or outflow area of the fibre material. Said means can optionally remain in the filter material in which case they should preferably have such a shape that paths or channels with reduced flow resistance are formed in the filter material, preferably paths extending from the outflow area of the filter and into the filter material. As examples of such channel shaped means may be mentioned: perforated tubes preferably provided with a point, rods of star shaped e.g. cross shaped, cross section, etc. Said means may be arranged fastened in the filter holder or inserted into the filter material before said material is arranged in the filter holder.

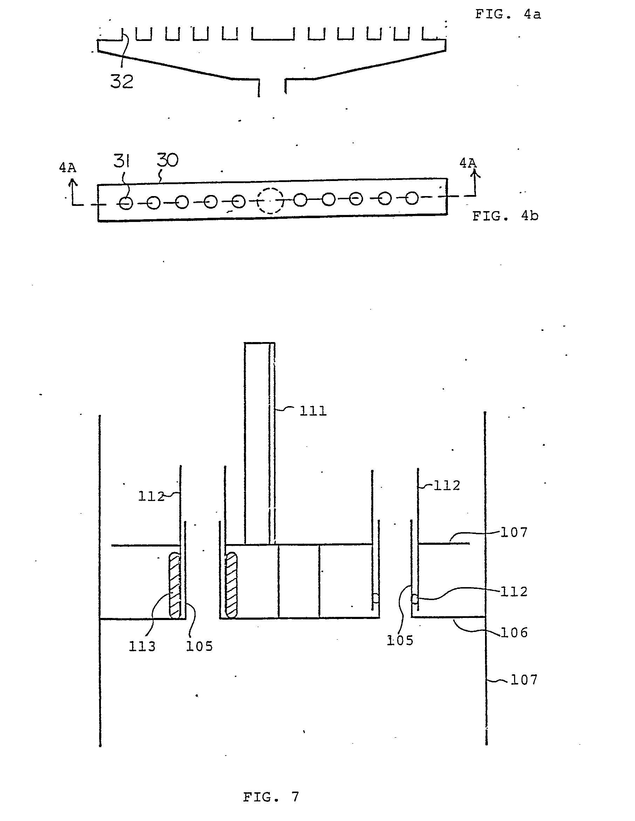

One way to improve the permeability of the filter in the desired flow direction, preferably the main direction plane of the fibres, is to form or shape elongated channels in said direction in the inner parts of the filter layer especially in the centre of said layer. Said channels may e.g. be bored or drilled into the filter layer from a side surface which is perpendicular to the main direction plane of the fibres, e.g. the side surface $S_1$ on Figure 1, e.g. in the form of a number of essentially parallel holes such as is indicated on Figure 3 which shows a side view of a parallel epipedical piece of filter material. The holes or channels may e.g. have a diameter of up to 50 mm, preferably up to 30 mm or up to 20 mm. The lower limit depends on the desired flow rate and may e.g. be 5 mm or 10 mm. The distance between the holes may vary but may e.g. amount to 0.1—10 times the thickness of the filter layer, preferably 0.2—2 times said thickness, e.g. 0.5—1 times said thickness (B on Figure 1). The filter material should preferably have such a stiffness or the diameter of the holes should be selected sufficiently small so that the filter material remains self-supporting and retains its shape under the influence of the flow-through forces, i.e. so that said holes remain open and with a sufficient cross section under the influence of the flow speed which is foreseen for the filtration and are not collapsed by the pressure difference. Said holes may also be supported with means which are inserted into the holes as mentioned above.

The filter holder shown on Figure 2 may be modified in many ways, e.g. with some other shape of the support of the outflow area of the filter in which case the opening 22 on Figure 2 can be substituted with two or more openings with support for the filter material in between, e.g. a mesh or an expanded metal sheet, or a surface or sheet provided with round holes or holes of other shape. Figures 4a and 4b, of which Figure 4a is a section along the line A—A on Figure 4b, show a bottom surface 30 provided with a number of round holes 31 with upwardly extending flanges 32, which are intended to penetrate into the side surface $S_1$ according to Figure 1 of a filter slab and act as a number of outlets from the filter arranged in a row. Said outlet openings 31 may also cooperate with and preferably be arranged coinciding with channels or holes in the filter slab which are perpendicular against the bottom surface 30 and improve the penetration.

The area may also be increased by inserting means from the side surfaces of the filter which open up recesses in the side surfaces of the filter material. Said means may consist of parts of a holder, e.g. consist of a number of spikes or teeth or similar means, preferably pointed spikes or teeth of sheet metal material which may be punched and bent up from the surface of a sheet in right angle to it. Preferably said surface increasing or surface opening means are inserted to a depth of up to half the thickness or more, e.g. up to 10 cm, up to 5 cm or up to 3 or 2 cm. The minimum depth may vary, e.g. at least 0.5 cm, at least 1 cm, at least 3 cm, at least 5 cm or may also amount to a certain part of the thickness of the filter layer e.g. at least 0.1, at least 0.2, at least 0.4 times that thickness. The recesses or surface increasing shapes are also arranged so that a sufficient minimum filter thickness remains to optional internal flow improving channels etc. in the inner part of the filter slab, e.g. at least 1 cm and preferably at least 2 or 3 cm remain to said means so that a sufficient filtering effect is ensured.

In order to improve the flow through the core of the filter material one may also in the middle of the filter material in, or after the production step by joining two pieces of filter material, arrange a central flow improving means, e.g. perforated corrugated cardboard or a similar means. Said means is thus arranged in the middle of the filter layer and essentially parallel with the main direction plane of the fibres. Said layer may extend to all side surfaces of the filter material which are perpendicular to the main direction plane or may be embedded so that said layer extends to only three, two or one or optionally not to any of said side surfaces.

A filter according to the invention can be operated with high filtering flow speed of the liquid. A flow speed, calculated on the outer surface of the filter, of above 10, usually above 20 and in many cases above 50 or even about 100 metres/hour or higher can be used, especially with the rockwool material mentioned above, especially a material of basalt-line type. A corresponding pressure drop through the filter may amount to up to 500 cms hydrostatic head. In many cases a hydrostatic head of up to 50 cms or up to 10 or 20 cms is sufficient. Frequently a hydrostatic head of 1—5 cms is sufficient.

It is also possible to arrange outside the filter material according to the invention a somewhat coarser filter material which removes coarser impurities, e.g. impurities with a size above 10 micrometres, 100 micrometres or 500 micrometres or even coarser impurities, e.g. with a size above 1 or 10 mms.

In practical use, especially of the materials mentioned above, the surface area load calculated on the outlet area U in most cases is from about 2500 to normally 1250—1000 metres/hour.

The height of the filter sheet from the outflow area is not restricted to the values stated above but is determined on the first hand by the manageability and may be e.g. up to 10 times the thickness or above, e.g. up to 15 or 20 times the thickness. The minimum height can also vary and is determined by practical decisions, provided that the filtering effect is sufficient, e.g. 0.5, 1, 2, 3 or 5 times the filter thickness.

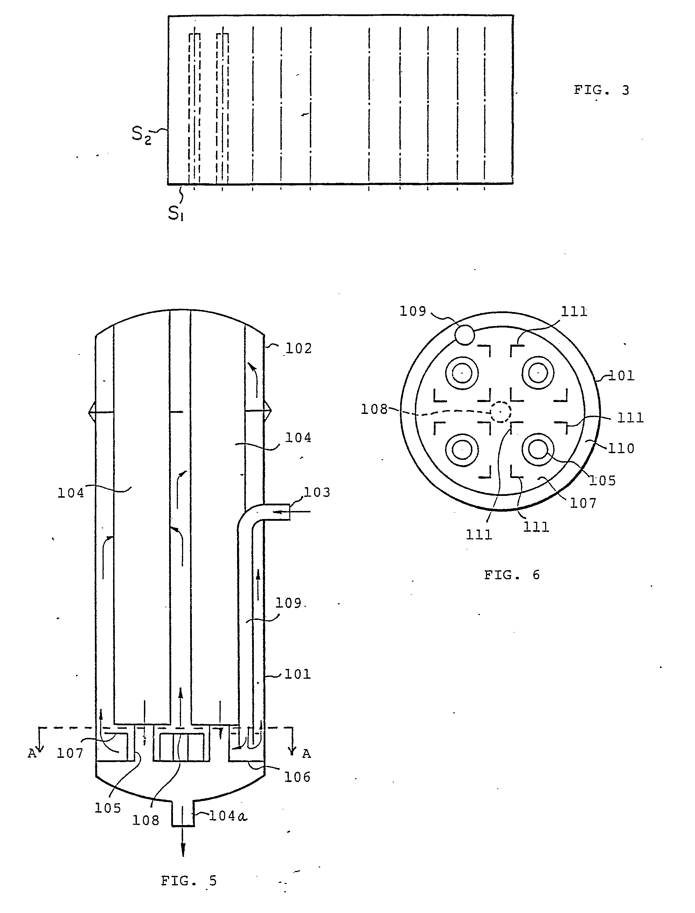

A suitable embodiment of the apparatus and method according to the invention is disclosed in detail with reference to Figure 5. Figure 5 discloses a vertically arranged cylindrical filter holder 101 with a cover 102, a liquid inlet 103 and a liquid outlet 104a. The apparatus is shown with part of the container wall 101 removed in order to improve the clarity of the figure.

Filter material rods 104 are arranged in the container. The figure shows two such filter rods of elongated shape, e.g. 10 × 10 cms in cross section and a length extension which is several times the size of the side, e.g. 50—100 cms, e.g. 90 cms. One of the smaller side ends of the filter rod contacts an outlet tube 105 arranged in a wall 106 in the bottom part of the container.

In order to achieve a more even distribution of the inflowing liquid over the surface of the filter rods 104 a baffel sheet 107 is arranged immediately above the bottom wall 106 and extending close to the wall of the container 101 but with a pass-by gap remaining between the wall of the container 101 and the baffel sheet 107. Hereby liquid which is introduced between the bottom wall 106 and the baffel sheet 107 is distributed around the periphery of the sheet 107 and flows through the gap between said sheet and the mantle surface of the container 101 and upwards along said mantle surface. Optionally the baffel sheet 107 may also be provided with a centrally arranged opening 108 which permits the flow of liquid between the filter rods 104 centrally in the container 101. The figure shows how liquid from the inlet 103 flows downwardly to the bottom wall 106 through a tube 109.

Many other arrangements are, of course, usable but it is suitable to achieve a flow of the introduced liquid along the mantle surface of the container 101 so that the liquid hereby is distributed as even as possible along the filter rods 104.

Figure 6 is a view from above of a cross section through the container 101 and shows the sheet 106 and outlet tubes 105 on which the filter rods shall be arranged. Support means 111 for the filter rods 104 are indicated. Said means consist of vertically arranged pieces of 90° V-section and are intended to guide three vertical edges of a filter rod with square cross section.

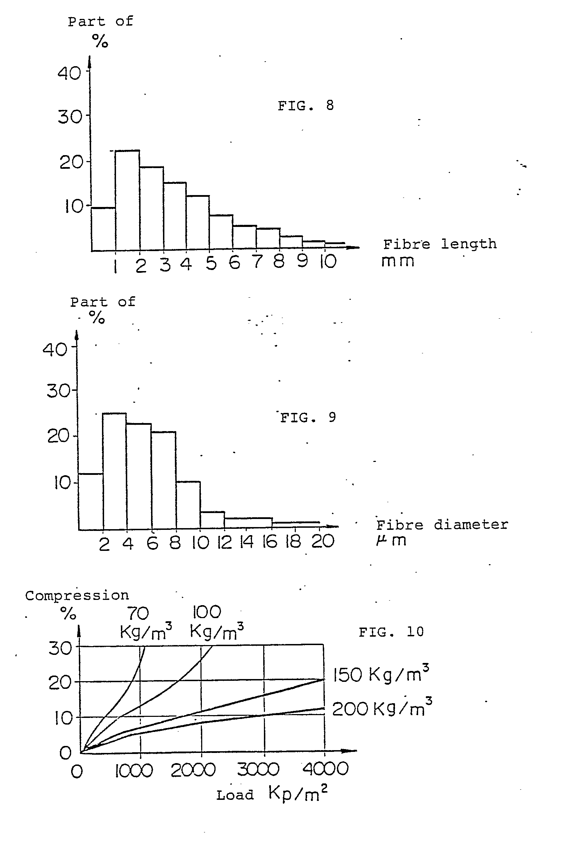

Figure 7 discloses another embodiment of the bottom according to which the baffel sheet 107 is provided with short tube pieces 112 extending through the bottom sheet 107 and surrounding the outlet tubes 105 which extend through the bottom sheet 106. Between said short tube sockets 112 and the outlet tubes 105 are arranged suit-

able sealing means, e.g. sealing rings 112 or sealing sleeves, e.g. rubber tubes 113 which may also be arranged outside the short tube sockets 112 as disclosed to the left on Figure 7. The filter rods 104 can then be arranged to seal against the upper end of the short tube sockets 112. The filter rods can be lifted out from the container 101 either separately or as a unit together with the baffel sheet 107.

Suitable dimensions of the device are e.g. a diameter of 25—40 cms of the container 101, e.g. 30 cms, a diameter of 40—60 mms of the short tube socket 112, e.g. an outer diameter of 54 mms and a height of the pipe sockets 112 above and below the sheet 107 of about 15—30 mms on each side.

With a breadth size S 1 of the filter material of about 50—200 and preferably 100 mms a diameter of the outlet of about 20—70, preferably 30—60 and especially about 40—60 and particularly about 50 mms may be suitable. When using rod-shaped filter elements of the size 100 × 100 × 900 mms of the type mentioned above an inner diameter d of the outlet tube of 20—50 and preferably 30—40 mms is suitable. In this case as in connection with other embodiments of devices according to the invention, it is suitable to arrange a supporting means, such as mesh, gauze, perforated disc over the outlet opening if said opening is in contact with the filter element in order to support said element and prevent that the filter material is pressed out through the outlet opening. A flow of up to about 7.5 $m^3$ per hour is preferred under the conditions stated above, but also higher flow values, e.g. up to 10 to 20 $m^3$ per hour can be used, especially if the vertical extension of the filter is restricted to up to 60 cms.

The outlet speed in the outlet opening is selected with regard to the characteristics of the filter material and suitable values are stated above. Suitable values are e.g. 0.1—5, e.g. 0.3—2 metres/second. Under conditions stated above 0.5—1.5 and especially 0.8—1.3 metres/second can be suitable.

In the method of filtering according to the invention a high value of the ratio of the size of the filter element inlet area to the outlet area is maintained. The value F of said ratio is above 10, preferably above 25, especially above 50 and frequently above 100 or above 250. For a filter rod of a square cross section and the size 100 × 100 × 900 mms said ratio F may amount to about 300 or above, for a filter disc of the size 900 × 100 × 450 mms to about 50 and for a circular filter rod of 65 mms diameter, vertical extension 100 mms to about 340. The area range referred to also corresponds to a large average distance between the outlet surface and inlet surface of the filter element and a corresponding long flow path through the filter element, e.g. an average flow path extension or distance of at least 10 cms, preferably at least 20 cms or at least 40 cms. Frequently the flow field within at least 20%, preferably at least 40%, e.g. at least 50% or at least 75% exhibits a main composant direction which coincides with the direction of a fibre orientation plane according to the definition above.

Suitable values of the distribution of fibre diameter and fibre length of the filter material according to the invention are disclosed on Figures 8 and 9. For a material according to the invention the values of the 5 or 6 highest of the interval columns disclosed on said figures are preferably between 0.2 and 5 and especially between 0.5 and 2 times the value of each column disclosed on the figures.

Figure 10 shows examples of suitable compressibility values of filter materials of various volume weights. The compressibility is preferably at most 10 and especially at most 5 or at most 2 times said values.

In order to improve the permeability and other characteristics the filter material may be entirely or partly coated with or treated so that a hydrophilic surface layer is obtained on the fibres, e.g. by coating with a per se known material of said type.

Fibre main direction plane of the fibre material is also intended to comprise the lay-down plane of a fibre material which is laid-down on a support surface of flat shape or other shape to form a fibre material layer, also if the fibres in the material do not exhibit the major directionality mentioned above in a particular plane but are rather randomly distributed in space, in which case the filter material layer frequently exhibits a sub-layer structure with a plurality of stacked parallel sublayers in which the fibres may be oriented in a preferred direction, as mentioned above, or may be more or less randomly oriented in space.

**Claims**

1. A process for filtering liquids for removing liquid or solid impurities which comprises passing said liquid through a body of mineral wool fibre material cut from a fibre material web with a thickness of at least 2 cm prepared by forming a melt into fibres with a thickness of essentially from 1 to 20 micrometres, depositing said fibres as a web on a surface and forming and bonding the fibres with a binder at a substantial part of the points at which the fibres contact each other to a layer web, characterized by using a web in which said fibres at least along the main part of the total fibre length exhibit a direction which deviates less than 45° from a main direction plane formed by said surface, said mineral fibre material having a density of from 50 to 200 kg/m³ and a stiffness, expressed as compressibility under a load of 4.9 kPa on the upper surface of a cylinder of the material with the diameter 100 mm and the height 100 mm of at most 40%, in which filtering process the liquid is brought to penetrate into said body of mineral fibre material through an inflow surface area comprising the major part of said body of fibre material and is removed from said body through an outflow surface area formed by at least one outlet opening nozzle urged against a surface of said body of fibre material cut in a direction transverse to the direction of said web, the ratio of the inflow surface area of said body of fibre material through which the liquid is introduced into the body and the outflow surface area through which the liquid is removed from said body of fibre material being at least 10, said inlet surface area of said body of fibre material being at least 90% of the total surface area of said body.

2. A process according to claim 1, characterized in that the mineral wool fibre material is formed from a material comprising 45—50% by weight $SiO_2$, 10—15% by weight $Al_2O_3$, 10—18% by weight CaO, 6—12% by weight MgO and 6—12% by weight FeO, especially a material made from diabase, optionally with 10—30% by weight CaO.

3. A process according to claim 1 or 2, characterized in that the ratio of the inflow surface area to the outflow surface area is above 25, especially above 50 or above 100.

4. A process according to any of claims 1—3, characterized by using a fibre material with a compressibility of at most 20% when measured according to claim 1.

5. A process according to any of the preceding claims, characterized by passing the liquid through the filter with a flow rate, calculated on the outer surface of the filter, of above 10, preferably above 20 and especially above 50 metres per hour.

6. A process according to any of the preceding claims, characterized by filtering an aqueous liquid, such as drinking water, aquaria water, swimming-pool water, sewage water, especially for final filtering after purification, or cooling water.

7. A process according to any of the preceding claims, characterized in that the outlet opening nozzle is arranged at a distance (d) of at least 1 cm and preferably at least 2 cm from the peripheral line of the surface ($S_1$) cut from the web against which said nozzle is urged.

8. A device for carrying out the process according to any of claims 1—7 for filtering liquid for removing liquid or solid impurities, characterized by comprising a holder means (26, 111) for a mineral fibre material body cut from a mineral fibre web with a thickness of at least 2 cm prepared by forming a melt into fibres with a thickness of essentially from 1 to 20 micrometres, depositing said fibres as a web on a surface and forming and bonding the fibres with a binder at a substantial part of the points at which the fibres contact each other to a layer web in which said fibres at least along the main part of the total fibre length exhibit a direction which deviates less than 45° from a main direction plane formed by said surface, said mineral fibre material having a density of from 50 to 200 kg/m³ and a stiffness, expressed as compressibility under a load of 4.9 kPa on the upper surface of a cylinder of the material with the diameter 100 mm and the height of 100 mm of at most 40%, arranged for holding an outer surface ($S_1$) of said filter body (1, 104) cut in a direction transverse to the plane of the web, against one or more portruding outlet means (23, 32, 112) arranged for withdrawing the filtered liquid from the filter body, said holder means leaving at least 90% of the outer surface area of said filter body free for inflow of the liquid which is to be filtered, the ratio of the inlet surface area of the filter body to the total outlet area of the outlet means being at least 10:1.

9. A device according to claim 8, characterized by comprising a filter body holder means (26, 111) arranged for holding a slab (1, 104) of the filter material of elongated shape with essentially square or rectangular cross section with a cut surface ($S_1$) of said slab against an outlet means (23, 32, 112) comprising one or more outlet openings arranged for being urged against said slab, said outlet openings preferably being arranged in row.

10. A device according to claim 8 or 9, characterized by comprising a container (101) with a sealing closure (102), inlet means (103) for introducing the liquid into the container under pressure surrounding the outer surface of the filter body (104), and filter body holding means (111) arranged for holding the filter body with the cut surface urged against said outlet means (112), said outlet means being connected to outflow means (104) for withdrawing the filtered liquid from said container (101).

**Patentansprüche**

1. Verfahren zum Filtrieren von Flüssigkeiten, um flüssige oder feste Verunreinigungen zu entfernen, bei dem man die Flüssigkeit durch einen Körper aus Mineralwollfasermaterial leitet, der aus einer Fasermaterialbahn mit einer Dicke von wenigstens 2 cm geschnitten ist, die hergestellt wurde durch Formen einer Schmelze zu Fasern mit einer Dicke von im wesentlichen 1 bis 20 µm, Ablagern der Fasern als Bahn auf einer Oberfläche und Formen und Binden der Fasern mit einem Bindemittel an einem wesentlichen Teil der Punkte, an denen die Fasern einander berühren zu einer Schichtbahn, gekennzeichnet durch die Verwendung einer Bahn, in der die Fasern wenigstens entlang des Hauptteils der Gesamtfaserlänge eine Richtung zeigen, die weniger als 45° von der Hauptrichtungsebene abweicht, die durch die Oberfläche gebildet wird, wobei das Mineralfasermaterial eine Dichte von 50 bis 200 kg/m³ und eine Steifheit, ausgedrückt als Kompressibilität unter Belastung der oberen Oberfläche eines Zylinders des Materials mit einem Durchmesser von 100 mm und einer Höhe von 100 mm mit 4,9 kPa, von wenigstens 40%, in welchem Filtrierverfahren die Flüssigkeit dazu gebracht wird, in den Mineralfasermaterialkörper einzudringen durch einen Einström-Oberflächenbereich, der den größeren Teil des Fasermaterialkörpers ausmacht, und aus dem Körper entfernt wird durch einen Ausström-Oberflächenbereich, der durch wenigstens eine Auslaßöffnungsdüse gebildet wird, die gedrückt ist gegen eine Oberfläche des Fasermaterialkörpers, die quer zur Richtung der Bahn geschnitten ist, wobei das Verhältnis des Einström-Oberflächenbereichs des Fasermaterialkörpers, durch den die Flüssigkeit in den Körper eingeleitet wird, zu dem Ausström-Oberflächenbereich, durch den die Flüssigkeit aus dem Fasermaterialkörper entfernt wird, wenigstens 10 beträgt, wobei der Einlaßoberflächenbereich des Fasermaterialkörpers wenigstens 90% des Gesamtoberflächenbereichs des Körpers ausmacht.

2. Verfahren nach Anspruch 1, dadurch gekennzeichnet, daß das Mineralwollfasermaterial aus einem Material hergestellt ist, das 45—50 Gew.-% $SiO_2$, 10—15 Gew.-% $Al_2O_3$, 10—18 Gew.-% CaO, 6—12 Gew.-% MgO und 6—12 Gew.-% FeO umfaßt, insbesondere ein Material aus Diabas, gegebenenfalls mit 10—30 Gew.-% CaO.

3. Verfahren nach Anspruch 1 oder 2, dadurch gekennzeichnet, daß das Verhältnis des Einström-Oberflächenbereichs zu dem Ausström-Oberflächenbereich über 25, insbesondere über 50 oder über 100, beträgt.

4. Verfahren nach irgendeinem der Ansprüche 1 bis 3, dadurch gekennzeichnet, daß ein Fasermaterial mit einer Kompressibilität von höchstens 20%, gemessen entsprechend Anspruch 1, verwendet wird.

5. Verfahren nach irgendeinem der vorhergehenden Ansprüche, dadurch gekennzeichnet, daß die Flüssigkeit durch das Filter mit einer Strömungsgeschwindigkeit von über 10, vorzugsweise über 20 und insbesondere über 50 Meter pro Stunde, berechnet an der äußeren Oberfläche des Filters, geleitet wird.

6. Verfahren nach irgendeinem der vorhergehenden Ansprüche, dadurch gekennzeichnet, daß eine wäßrige Flüssigkeit filtriert wird, wie z.B. Trinkwasser, Aquariumwasser, Schwimmbadwasser, Abwasser, insbesondere zur Endfilterung nach der Reinigung, oder Kühlwasser.

7. Verfahren nach irgendeinem der vorhergehenden Ansprüche, dadurch gekennzeichnet, daß die Auslaßöffnungsdüse in einem Abstand (d) von wenigstens 1 cm und vorzugsweise von wenigstens 2 cm zu der Umfangslinie der Oberfläche ($S_1$) angeordnet ist, die aus der Bahn, gegen welche die Düse gedrückt wird, herausgeschnitten ist.

8. Vorrichtung zur Durchführung des Verfahrens nach irgendeinem der Ansprüche 1 bis 7 zum Filtrieren von Flüssigkeiten, um flüssige oder feste Verunreinigungen zu entfernen, dadurch gekennzeichnet, daß sie eine Halteeinrichtung (26, 111) für einen Mineralfasermaterialkörper aufweist, der aus einer Mineralfaserbahn mit einer Dicke von wenigstens 2 cm geschnitten ist, die hergestellt wurde durch Formen einer Schmelze zu Fasern mit einer Dicke von im wesentlichen 1 bis 20 µm, Ablagern der Fasern als Bahn auf einer Oberfläche und Formen und Binden der Fasern mit einem Bindemittel an einem wesentlichen Teil der Punkte, an denen die Fasern einander berühren, zu einer Schichtbahn, in der die Fasern wenigstens entlang des Hauptteils der Gesamtfaserlänge eine Richtung zeigen, die weniger als 45° von der Hauptrichtungsebene abweicht, die durch die Oberfläche gebildet wird, wobei das Mineralfasermaterial eine Dichte von 50 bis 200 kg/m³ und eine Steifheit, ausgedrückt als Kompressibilität unter Belastung der oberen Oberfläche eines Zylinders des Materials mit einem Durchmesser von 100 mm und einer Höhe von 100 mm mit 4,9 kPa, von wenigstens 40%, die angeordnet ist zum Halten einer Außenfläche ($S_1$) des Filterkörpers (1, 104), der in einer Richtung quer zur Ebene der Bahn geschnitten ist, gegen eine oder mehrere hervorstehende Auslaßeinrichtungen (23, 32, 112), die angeordnet sind zum Ableiten der filtrierten Flüssigkeit aus dem Filterkörper, wobei die Halteeinrichtung wenigstens 90% des äußeren Oberflächenbereichs des Filterkörpers frei läßt zum Einströmen der zu filtrierenden Flüssigkeit und wobei das Verhältnis des Einlaß-Oberflächenbereichs des Filterkörpers zum gesamten Auslaßbereich der Auslaßeinrichtung wenigstens 10:1 beträgt.

9. Vorrichtung nach Anspruch 8, gekennzeichnet, durch eine Filterkörper-Halteeinrichtung (26, 111), die angeordnet ist zum Halten eines Blocks (1, 104) aus Filtermaterial in langgestreckter Form mit im wesentlichen quadratischem oder rechtwinkligem Querschnitt mit einer geschnittenen Oberfläche ($S_1$) des Blocks gegen eine Auslaßeinrichtung (23, 32, 112), die eine oder mehrere Auslaßöffnungen aufweist, welche so angeordnet sind, daß sie gegen den Block gedrückt werden, wobei die Auslaßöffnungen vorzugsweise in Reihe angeordnet sind.

10. Vorrichtung nach Anspruch 8 oder 9, gekennzeichnet durch einen Behälter (101) mit einem Dichtungsabschluß (102), einer Einlaßeinrichtung (103), die die äußere Oberfläche des Filterkörpers (104) umgibt, zum Einführen der Flüssigkeit in den Behälter unter Druck sowie eine Filterkörper-Halteeinrichtung (111), die angeordnet ist zum Halten des Filterkörpers, mit der geschnittenen Oberfläche gegen die Auslaßeinrichtung (112) gedrückt, wobei die Auslaßeinrichtung verbunden ist mit einer Ausströmeinrichtung (104) zum Abziehen der filtrierten Flüssigkeit aus dem Behälter (101).

**Revendications**

1. Procédé pour filtrer des liquides pour éliminer des impuretés liquides ou solides, qui comprend l'opération consistant à faire passer le liquide à travers un corps en une matière à base de fibres de laine minérale découpé dans une nappe de matière fibreuse ayant une épaisseur d'au moins 2 cm, préparée en formant à partir d'une masse fondue des fibres d'une épaisseur comprise essentiellement entre 1 et 20 micromètres, en déposant ces fibres sous forme d'une nappe sur une surface et en formant et en liant les fibres avec un liant en une partie substantielle des points où les fibres sont en contact les unes avec les autres sous la forme d'une nappe stratifiée, caractérisé par l'utilisation d'une nappe dans laquelle lesdites fibres, au moins sur la majeure partie de la longueur totale de la fibre, présentent une direction qui s'écarte de moins de 45° d'un plan directeur principal formé par ladite surface, ladite matière à base de fibres minérales possédant une densité de 50 à 200 kg/m³ et une rigidité, exprimée par la compressibilité sous une charge de 4,9 kPa appliquée sur la surface supérieure d'un cylindre de la matière ayant un diamètre de 100 mm et une hauteur de 100 mm, d'au moins 40%, dans lequel procédé le liquide est amené à pénétrer dans ledit corps de matière à base de fibres minérales par une aire d'entrée comprenant la majeure partie dudit corps de matière fibreuse, et est évacué dudit corps par une aire de sortie formée par au moins une buse comportant une ouverture de décharge appuyée contre une surface du corps de matière fibreuse découpée dans une direction transversale à la direction de ladite nappe, le rapport de l'aire d'entrée du corps de matière fibreuse par laquelle le liquide est introduit dans le corps à l'aire de sortie par laquelle le liquide quitte le corps de matière fibreuse étant d'au moins 10, ladite aire d'entrée dudit corps de matière fibreuse étant au moins 90% de l'aire totale du corps.

2. Procédé selon la revendication 1, caractérisé en ce que la matière à base de fibres de laine minérale est formée à partir d'une matière comprenant 45—50% en poids de $SiO_2$, 10—15% en poids de $Al_2O_3$, 10—18% en poids de CaO, 6—12% en poids de MgO et 6—12% en poids de FeO, notamment une matière faite de diabase, avec éventuellement 10—30% en poids de CaO.

3. Procédé selon la revendication 1 ou 2, caractérisé en ce que le rapport de l'aire d'entrée à l'aire de sortie est supérieur à 25, notamment supérieur à 50 ou supérieur à 100.

4. Procédé selon l'une quelconque des revendications 1—3, caractérisé par l'utilisation d'une matière fibreuse ayant une compressibilité d'au moins 20% lorsque mesurée selon la revendication 1.

5. Procédé selon l'une quelconque des revendications précédentes, caractérisé par le passage du liquide à travers le filtre à une vitesse d'écoulement, calculée sur la surface extérieure du filtre, supérieure à 10, de préférence supérieure à 20 et, en particulier, supérieure à 50 mètres par heure.

6. Procédé selon l'une quelconque des revendications précédentes, caractérisé par le filtrage d'un liquide aqueux, tel que de l'eau potable, de l'eau d'aquarium, de l'eau de piscine, de l'eau d'égout, en particulier pour la filtration finale après purification, ou de l'eau de refroidissement.

7. Procédé selon l'une quelconque des revendications précédentes, caractérisé en ce que la buse comportant une ouverture de décharge est disposée à une distance (d) d'au moins 1 cm et, de préférence, d'au moins 2 cm de la ligne périphérique de la surface ($S_1$) découpée dans la nappe, contre laquelle la buse est appuyée.

8. Dispositif pour mettre en oeuvre le procédé selon l'une quelconque des revendications 1—7 pour filtrer un liquide pour éliminer des impuretés liquides ou solides, caractérisé en ce qu'il comprend des moyens de retenue (26, 111) pour un corps de matière à base de fibres minérales, découpé dans une nappe de fibres minérales ayant une épaisseur d'au moins 2 cm, préparée en formant à partir d'une masse fondue des fibres d'une épaisseur comprise essentiellement entre 1 et 20 micromètres, en déposant lesdites fibres sous la forme d'une nappe sur une surface et en formant en liant les fibres avec un liant en une partie substantielle des points où lesdites fibres sont en contact les unes avec les autres, sous la forme d'une nappe stratifiée dans laquelle lesdites fibres, au moins sur la majeure partie de leur longueur totale, présentent une direction qui s'écarte de moins de 45° d'un plan directeur principal formé par ladite surface, ladite matière à base de fibres minérales ayant une densité de 50 à 200 kg/m$^3$ et une rigidité, exprimée par la compressibilité sous une charge de 4,9 kPa appliquée sur la surface supérieure d'un cylindre de la matière ayant un diamètre de 100 mm et une hauteur de 100 mm, d'au moins 40%, agencé pour maintenir une surface extérieure (S1) dudit corps filtrant (1, 104) découpée dans une direction transversale au plan de la nappe, contre un ou plusieurs moyens de décharge en saillie (23, 32, 112) agencés pour évacuer le liquide filtré du corps filtrant, lesdits moyens de retenue laissant au moins 90% de l'aire de la surface extérieur dudit corps filtrant libre pour l'entrée du liquide qui doit être filtré, le rapport de l'aire d'entrée du corps filtrant à l'aire de sortie totale des moyens de décharge étant d'au moins 10:1.

9. Dispositif selon la revendication 8, caractérisé en ce qu'il comprend des moyens (26, 11) de retenue du corps filtrant, agencés pour maintenir un panneau (1, 104) de la matière filtrante de forme allongée, ayant une section droite sensiblement carrée ou rectangulaires avec une surface découpée (S1) dudit panneau contre des moyens de décharge (23, 32, 112) comprenant une ou plusieurs ouvertures de décharge destinées à être appuyées contre ledit panneau, lesdites ouvertures de décharge étant, de préférence, alignées.

10. Dispositif selon la revendication 8 ou 9, caractérisé en ce qu'il comprend un boîtier (101) pourvu d'une fermeture hermétique (102), des moyens d'entrée (103) pour introduire le liquide dans le boîtier sous pression entourant la surface extérieure du corps filtrant (104), et des moyens (111) de retenue du corps filtrant agencés pour maintenir le corps filtrant avec la surface découpée appuyée contre les moyens de décharge (112), lesdits moyens de décharge étant reliés à des moyens d'évacuation (104) pour évacuer le liquide filtré dudit conteneur (101).

FIG. 1

FIG. 2a

FIG. 2b

FIG. 4a

32

4A    31    30                                     4A

FIG. 4b

111

112    112    107

113    105    105    106    107

FIG. 7

FIG. 3

FIG. 6

FIG. 5

3

Part of
%

FIG. 8

Fibre length
mm

Part of
%

FIG. 9

Fibre diameter
μm

Compression
%

70
Kg/m³

100
Kg/m³

FIG. 10

150 Kg/m³

200 Kg/m³

Load  Kp/m²

4